# EUROPEAN PATENT APPLICATION

(11) **EP 1 077 581 A1**
(43) Date of publication of application: **21.02.2001**
(21) Application number: 00402146.5
(22) Date of filing: 27.07.2000
(51) Int. Cl.: H04Q 7/38, H04B 7/26

(54) **Method and system for selecting a channel in a radiocommunications system**

(30) Priority: 18.08.1999 ES 9901906
(71) Applicant: ALCATEL, 75008 Paris (FR)
(72) Inventor: Fernandez Duran, Alfonso, 28229 Villanueva del Pardillo, Madrid (ES)
(74) Representative: Lamoureux, Bernard

(57) **Abstract**

Method for selecting a channel in a radiocommunications system in which a remote unit (12-i) is continuously sending its data bursts over a first radio channel (Drs), formed by a first double time slot and a first carrier frequency (fz).

The fixed unit broadcasts a master signal over a B field of a pilot channel (Dsp), formed by a second double time slot and a carrier frequency (fz). The remote unit selects a pilot channel (Dsp), formed by a second double time slot and a carrier frequency (fz) to be selected as a function of the impairment level in the pilot channel (Dsp) received determined by the measurement of the number of errors found in the B field, taking place a handover to the selected pilot channel (Dsp) when the first radio channel (Dsr) presents an impairment level greater than a predetermined impairment level.

## Description

### OBJECT OF THE INVENTION

The present invention relates to a method and system for implementing dynamic channel selection in a radiocommunications system that comprises one or more fixed units connected to a transport network such as the public switched telephone network PSTN.

Communication between a fixed unit and a group of remote units, fixed and/or mobile, located within the coverage area associated with the fixed unit, is achieved by means of a group of radio links that are employed in both transmission directions, uplink direction from remote units to fixed unit and downlink direction from fixed unit to remote units, making joint use of time division duplex (TDD) and of time division multiple access (TDMA) techniques.

The procedure for dynamic selection of the radio channel is of special, but not exclusive, application in a digital enhanced cordless telecommunications system (DECT) that is provisioning data services over radio channels permanently allocated to a user or group of users for their exclusive use, namely leased lines or links.

### STATE OF THE ART

A radiocommunications system is connected to a transport network, such as a public switched telephone network PSTN, by means of fixed units and to the subscribers by means of remote units, fixed and/or mobile, distributed throughout the coverage area associated with each fixed unit.

The end connection to the subscribers is made over cable, by radio access, or by a mix of the two. The system has a tree structure, in which the fixed unit can be connected by radio with the remote units that are within its coverage area.

The interconnection between the fixed unit and the remote units makes possible the provision of optimised data services for data burst transmission.

One form of establishing and maintaining reliable connections between the fixed unit and the remote units is achieved by means of radio channels permanently allocated to a user or group of users for their exclusive use, namely leased lines or links. These subscriber services require the radio link to maintain its capacity and to be optimised for data burst transmission; and to have a high level of availability, a low error rate BER, and high reliability.

Consequently, there is an interchange of information to guarantee end-to-end compatibility, i.e., between subscriber terminal sets, which can be read by the fixed unit, for example, or relayed into the public switched telephone network PSTN.

Thus, to provide this data service a predetermined number of radio channels is reserved from those available in the DECT radiocommunications system, disabling the allocated radio channels for use by other remote units located in the same cell or in another adjacent cell which may be searching for a radio channel in order to perform a handover, for example.

ITU-T Recommendation G.821 defines the quality and availability required from a radio link that is to furnish services as a leased line, i.e., have a reserved traffic capacity.

In the event that the radio link is formed by a double channel, i.e., formed by two consecutive time slots, corresponding to the same transmission direction and pertaining to the same connection, the parameters that define the impairment in the radio channel, such as number of errors detected in the signalling code in the signalling field, then the cyclic redundancy code of the same signalling field, followed by detection of overlaps or collisions in the information field, they result in a measure of the quality of the connection which does not offer sufficient guarantee for determining the double channel that offers best quality from those available, at any given moment.

Consequently, the operational requirements impose a need for having a dynamic channel selection DCS procedure capable of measuring the impairment in a radio channel allocated to a connection and of finding a new channel that satisfies the operational requirements and carrying out the corresponding handover.

Thus, the service shall be stable, of high quality and availability, at the same time that in the event of it being necessary, the handover procedure between channels belonging to the same or different cells is carried out rapidly, avoiding failures in the handover and set-up procedure.

### CHARACTERISATION OF THE INVENTION

To overcome the problems described above, a procedure is proposed for selecting a channel in a radiocommunications system in which a remote unit continuously sends data bursts over a first radio channel formed by a first double time slot of a TDMA frame and a first carrier frequency of a set of carrier frequencies.

The fixed unit broadcasts, by means of a pilot channel formed by a second double time slot of the TDMA frame and a carrier frequency, a master signal inserted in an information field of the pilot channel.

The remote unit selects a pilot channel formed by the same second double time slot and a carrier frequency to be selected, from among those designated as available, as a function of the impairment level in the pilot channel determined by measuring the number of errors found in the information field of the pilot channel, by passing sequentially through the different carrier frequencies available.

Next, the remote unit performs a handover from the first radio channel to the selected pilot channel, formed by the same second double time slot and the selected carrier frequency, when the first radio channel presents an impairment level greater than a predetermined impairment level, and thereafter transmits a data packet previously fragmented according to the capacity of the pilot channel selected.

Next, it takes place the selection of a second radio channel formed by the first double time slot and a carrier frequency (fz) to be selected. For selection of this radio channel the process is similar to that already described, with the particularity that the fixed unit broadcasts over the first duplex radio channel, formed by the first duplex double time slot and a carrier frequency (fz), the master signal inserted in the information field of the first duplex radio channel.

In brief, the remote unit temporarily occupies a double pilot channel while it scans the carrier frequencies to select a double radio channel with a suitable signal level to carry a data service on leased lines.

### BRIEF DESCRIPTION OF THE FIGURES

A more detailed explanation of the invention is given in the following description, based on the figures attached, in which:
- figure 1 shows, in block diagram form, a radiocommunications system connected to a public switched telephone network according to the invention,
- figure 2 shows diagrammatically a representation of a sample taken of a signal received over the radio interface according to the invention,
- figure 3 shows, in block diagram form, the signalling in a pilot channel according to the invention,
- figure 4 shows, in block diagram form, a master signal in the pilot channel according to the invention,
- figure 5 shows a block diagram of a remote unit according to the invention, and
- figure 6 shows a block diagram of a fixed unit according to the invention.

### DESCRIPTION OF THE INVENTION

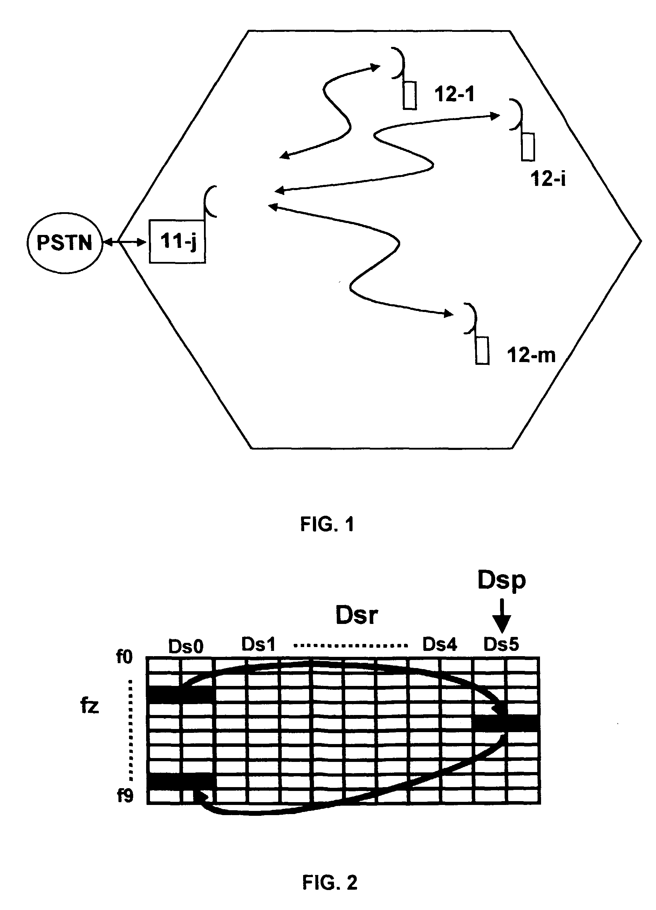

Figure 1 shows a radiocommunications system, such as a digital enhanced cordless telecommunications (DECT) system, which provides duplex communications between a set of fixed units 11-1 to 11-n and a set of remote units 12-1 to 12-m, fixed and/or mobile. Normally, the fixed units 11-1 to 11-n are connected to a telephone transport network such a public switched telephone network PSTN.

A fixed unit 11-j (where j = 1, ..., n) is capable of maintaining and setting up, simultaneously, several radio communications with a plurality of remote units 12-1 to 12-m located within its coverage area.

Thus, when a subscriber has a link permanently allocated for transmitting and receiving data between the fixed unit 11-j and a remote unit 12-i (where i = 1, ..., m), there is a radio channel, formed by a double time slot of a TDMA frame and a carrier frequency fz (where z = 0, ..., 9), permanently allocated to the connection.

The fixed unit 11-j is capable of carrying out procedures to guarantee the correct performance of the interworking functions, such as routing and forwarding, with the PSTN. These procedures are based on the network protocols in parallel layers for providing information paths between the remote unit 12-i and the fixed unit 11-j, and on information regarding signalling received from and sent to the PSTN.

In relation with figure 2, the radio channel allocated to a leased line comprises a double time slot of the TDMA frame and a carrier frequency fz forming a double channel Dsr (where r = 0, ..., 5) that transports a payload of 800 bits, i.e. it offers a sustainable capability for data packet transmission at 64 kbps.

Consequently, the double channel Dsr sets up a permanent connection between the fixed unit 11-j and the remote unit 12-i. Within an established connection, if there is no traffic, the DECT system is capable of suspending or interrupting the connection at the lowest level of the signalling protocol, while maintaining the connection intact at network level.

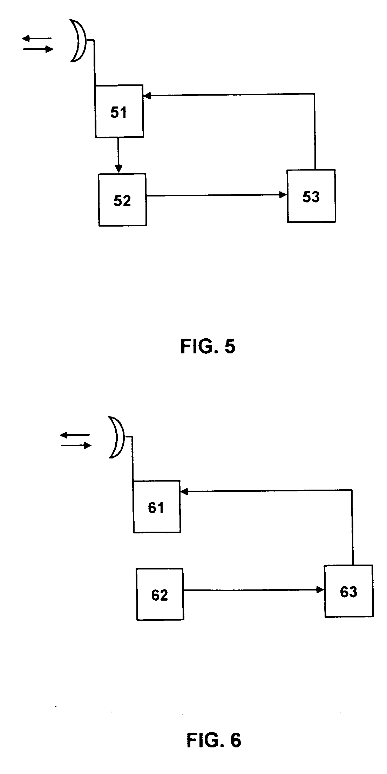

Once traffic is resumed, the connections at MAC (media access control) level and at DLC (data link control) level are quickly re-established. Therefore, the radio channel is rapidly restored. Thus, there is no call set-up and the successive TDMA frames are transmitted over the double channel Dsr between radio interfaces 51 and 61 belonging, respectively, to the remote unit 12-i and to the fixed unit 11-j, as shown in figures 5 and 6.

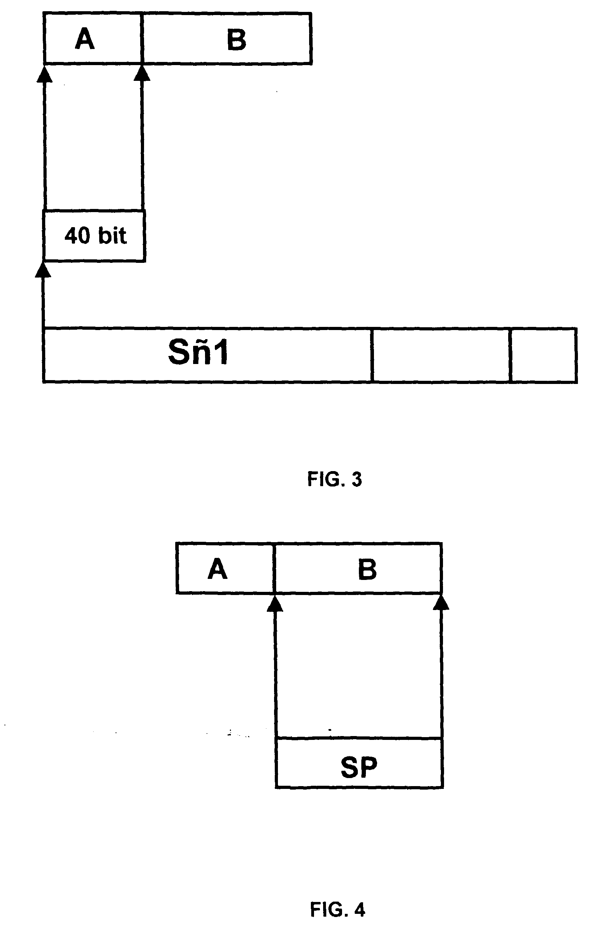

Now, in relation with figure 2, once a first double channel Ds0 has been set up, for example a first double time slot and a carrier frequency f2, and before starting to send, or at the same time as user information is sent in the information field B, takes place the transfer of the signalling messages S 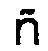 1 over signalling field A between remote unit 12-i and fixed unit 11-j, as shown in figure 3.

This type of messaging takes place in the correlative uplink and downlink directions of the TDMA frame.

In the header of field A a signalling code S is sent, in the tail the packet (40 bits) corresponding to the signalling message and following the 16-bit cyclic redundancy code CRC for checking.

Once communication is set up in the B field, the MAC (media access control) entity continues decoding the header of field A since, overlaid on the data, a control multiframe is still active using field A, with possible requests for handover or signalling.

Error detection continues active, employing cyclic redundancy code CRC for field A, a cyclic redundancy code X for field B and there is a field Z inside field B for detecting overlaps or collisions. From all this, a measurement of the connection quality is obtained which can lead, if not satisfactory, to remote unit 12-i requesting handover.

With the aforementioned mechanisms for control of radio channel impairment, the effectiveness of the set-up and handover procedures cannot be guaranteed for a radio channel with a double time slot for the provision of data transmission service over leased lines. The conditions for these services demand high quality (BER=1e-6) and high availability (GoS<0.01).

Given that for the error rate BER demanded the use of the cyclic redundancy code CRC for the field A does not offer sufficient guarantee, as it is very limited, since a long integration time is required and, consequently, the percentage of interruptions shall also be high.

The required error rate BER is very low, and in this error rate range operation also depends on other effects which do not appear when measuring the received signal strength intensity, RSSI.

The method of the invention offers a stable dynamic channel selection (DCS) procedure of high quality and high quality of the link, since it is capable of measuring the impairment in a radio channel allocated to a connection and finding a new channel (handover procedure) that meets the operational requirements and that is adapted to the radio environmental conditions (specific channel noise).

The DCS procedure must start immediately after channel impairment has been confirmed. The beginning of a carrier frequency handover procedure can be due to miscellaneous reasons, including a normal operation of the DECT system. The remote unit 12-i has information relative to the number of errors found in the information field B of the first double channel Ds0.

The handover is controlled by the remote unit 12-i. While it communicates over the original link, it scans the other channels and identifies the free channels with a signal better than the present one.

In the leased line, the time slots that are reserved for or permanently allocated to the connection are maintained for the purpose of maintaining radio channel quality (without interference). Thus, the remote unit 12-i triggers the hunt for an available channel (carrier frequency).

Now, in relation with figure 2, the fixed unit 11-j sets up a pilot double channel Dsp (where p = 0, ..., 5) for use during the handover procedure of carrier frequency fz (where z = 0, ..., 9), with the objective of scanning the carrier frequencies f0, ..., f9 available, so that the remote unit 12-i selects the carrier frequency fz most suitable for a second double channel Ds0 (same double time slot and a new carrier frequency), that is a new channel, the error rate BER of which is sufficiently low.

While scanning the carrier frequencies f0, ..., f9 via the pilot double channel Dsp formed by the same double time slot and one of the carrier frequencies, the fixed unit 11-j transmits a known master signal SP inserted in the information field B (800 bits) of the pilot double channel Dsp, repeating the sending process for each one of the carrier frequencies fz, sweeping through all the carrier frequencies fz.

The remote unit 12-i receives the pilot double channel Dsp in a carrier frequency fz under test, detects the master signal SP received and analyses the information field B to find the number of errors that there is in the pilot double channel Dsp for each of the carrier frequencies fz, just as the error control is performed during the transmission phase in the MAC (media access control) entity.

Consequently, the remote unit 12-i draws up and maintains a list of radio channels, with double time slots, with their quality grading, i.e. with their different RSSI reception levels and error rate BER, to be consulted for handover management, for the purpose of selecting the most appropriate and performing a fast handover to avoid service interruptions on the leased line.

The remote unit 12-i chooses a pilot double channel Dsp whose carrier frequency fz has the required quality, and transmits the choice in the A field. If the MAC (media access control) entity authorises the handover, it confirms the use of the proposed pilot double channel Dsp, and the remote unit 12-i starts to send the user information messages over the pilot double channel Dsp chosen in parallel with the first double channel Ds0 (old), after which the later is released.

After the handover process has been successfully completed, it takes place the selection of a second radio channel Ds0 formed by the first double time slot and a carrier frequency fz to be selected.

For selection of this second radio channel Ds0 (new radio channel), the process is similar to that previously described, with the particularity that the fixed unit 11-j broadcasts over the first duplex radio channel formed by the first duplex double time slot and a carrier frequency fz, the master signal SP inserted in the information field B of the first duplex radio channel. The transmission being repeated for each one of the carrier frequencies (fz).

As is shown in figure 2, the first double channel Ds0 (old) is maintained in the double time slot allocated to the leased line and in a first carrier frequency fz, while the second double channel Ds0 (new) is established in parallel in the same double time slot and on a second carrier frequency fz+y (z+y takes a value that lies between 0 and 9). To this end, the leased line service temporarily occupies the pilot double channel Dsp.

In brief, as the overall handover process is fairly slow, only those carrier frequencies fz that demonstrate a relatively low level in their RSSI reception levels, i.e. below a level predetermined by the remote unit 12-i are scanned.

Consequently, the remote unit 12-i draws up and maintains a list of radio channels with their quality grading, i.e. with their different RSSI reception levels and error rate BER, to be consulted for handover management, for the purpose of selecting the most appropriate and performing a fast handover to avoid service interruptions on the leased line.

The pilot double channel Dsp is set up by the fixed unit 11-j for the purpose of testing the bank of carrier frequencies f0, ..., f9 available for avoiding interruptions during the operation of the leased line.

The fixed unit 11-j shall have transmitted the characteristics of the pilot double channel Dsp, in the broadcast data sent in the signalling field A of several radio channels in successive frames or of the pilot double channel Dsp. In the event that the coverage area of the fixed unit 11-j comprises a predetermined number of sectors, it shall be necessary to employ a pilot double channel Dsp per cell sector.

In relation with figure 6, the fixed unit 11-j has a radio interface 61 through which it broadcasts the pilot channel Dsp. Generator means 62 generate the master signal SP that is supplied to insertion means 63 that insert it into the information field B of the pilot channel Dsp and/or into the information field B of the first duplex radio channel Dsr.

Now, in relation with figure 5, the remote unit 12-i receives the pilot channel Dsp via a radio interface 51 which is connected to selector means 52 that select the pilot channel Dsp formed by said second double time slot and a carrier frequency fz to be selected, from among those designated as available, as a function of the impairment level of the pilot channel Dsp determined by measuring the number of errors found in said information field B of the pilot channel Dsp.

Once the selection has been made, handover means 53 transfer a data packet from the first radio channel Dsr to the pilot channel Dsp chosen, previously fragmented according to the capacity of said selected pilot channel Dsp, when said first radio channel Dsr presents an impairment level greater than a predetermined impairment level, for the purpose of transmitting it via the radio interface 51.

Likewise, the selector means 52 select a second radio channel Dsr formed by said first double time slot and a carrier frequency fz to be selected as a function of the impairment level of the first duplex radio channel Dsr determined by measuring the number of errors found in said information field B of the first duplex radio channel Dsr, passing sequentially through the different carrier frequencies fz available.

## Claims

1. **Method for selecting a channel in a radiocommunications system** in which a set of remote units (12-1, ..., 12-m) transmit data bursts to at least one fixed unit (11-j), such that a remote unit (12-i) sends data bursts over a first radio channel (Dsr) formed by a first double time slot of a TDMA frame and a first carrier frequency (fz) of a set of carrier frequencies (f0, ..., f9); **characterised** in that it comprises the following stages:
- broadcasting, on the part of said fixed unit (11-j), over a pilot channel (Dsp) formed by a second double time slot of said TDMA frame and a carrier frequency (fz), of a master signal (SP) inserted in an information field (B) of said pilot channel (Dsp), repeating the emission for each one of the carrier frequencies (fz),
- selection, on the part of said remote unit (12-j), of a pilot channel (Dsp) formed by said second double time slot and a carrier frequency (fz) to be selected, among those designated as available, as a function of the impairment level of said pilot channel (Dsp) determined by measuring the number of errors found in said information field (B) of said pilot channel (Dsp), passing sequentially through the different carrier frequencies (fz) available,
- handover, on the part of said remote unit (12-j), of said first radio channel (Dsr) to the selected pilot channel (Dsp) formed by said second double time slot and said selected carrier frequency (fz), when said first radio channel (Dsr) presents an impairment level greater than a predetermined impairment level, and
- transmission, on the part of said remote unit (12-j), of a data packet previously fragmented according to the capacity of said selected pilot channel (Dsp).

2. **Method for selecting a channel** according to claim 1 **characterised** in that it also comprises the stages of:
- broadcasting, on the part of said fixed unit (11-j), over the first duplex radio channel (Dsr) formed by said first duplex double time slot and a carrier frequency (fz), of said master signal (SP) inserted in an information field (B) of said first duplex radio channel (Dsr), repeating the emission for each one of the carrier frequencies (fz),
- selection, on the part of said remote unit (12-j), of a second radio channel (Dsr) formed by said first double time slot and a carrier frequency (fz) to be selected, among those indicated as available, as a function of the impairment level of said first duplex radio channel (Dsr) determined by measuring the number of errors found in said information field (B) of said first duplex radio channel (Dsr), passing sequentially through the different carrier frequencies (fz) available,
- handover, on the part of said remote unit (12-j), of said first radio channel (Dsr) to a selected second radio channel (Dsr) formed by said first double time slot and said selected carrier frequency (fz), and
- transmission on the part of said remote unit (12-j), of a data packet previously fragmented according to the capacity of said selected second radio channel (Dsr) with better impairment level than the first radio channel (Dsr).

3. **System for selecting a channel** in which a set of remote units (12-1, ..., 12-m) transmit data bursts to at least one fixed unit (11-j), such that a remote unit (12-i) sends data bursts continuously over a radio channel (Dsr) formed by a first double time slot of a TDMA frame and a carrier frequency (fz) of a set of carrier frequencies (f0, ..., f9); **characterised** in that said fixed unit (11-j) comprises a radio interface (61) through which it broadcasts a pilot channel (Dsp) formed by a second double time slot of said TDMA frame and a carrier frequency (fz); generator means (62) that generates a master signal (SP), said master signal (SP) being inserted, by means of insertion means (63), in said information field (B) of said pilot channel (Dsp) and/or in said information field (B) of said first duplex radio channel (Dsr).

4. **System for selecting a channel** according to claim 3; **characterised** in that said remote unit (12-i) comprises a radio interface (51) through which it receives said pilot channel (Dsp) formed by a second double time slot of said TDMA frame and a carrier frequency (fz); selector means (52) which select a pilot channel (Dsp) formed by said second double time slot and a carrier frequency (fz) to be selected, among those designated as available, as a function of the impairment level of said pilot channel (Dsp) determined by measuring the number of errors found in said information field (B) of said pilot channel (Dsp), passing sequentially through the different carrier frequencies (fz) available; handover means (53) that transfer a data packet from said first radio channel (Dsr) to the selected pilot channel (Dsp), previously fragmented according to the capacity of said selected pilot channel (Dsp), when said first radio channel (Dsr) presents an impairment level greater than a predetermined impairment level, for the purpose of transmitting it over said radio interface (51).

5. **System for selecting a channel** according to claim 4; **characterised** in that said selector means (52) select a second radio channel (Dsr) formed by said first double time slot and a carrier frequency (fz) to be selected, among those designated as available, as a function of the impairment level of said first duplex radio channel (Dsr) determined by measuring the number of errors found in said information field (B) of said first duplex radio channel (Dsr), passing sequentially through the different carrier frequencies (fz) available.
